# FASCICULE DE BREVET EUROPEEN

(11) **EP 0 596 797 B1**
(45) Date de publication et mention de la délivrance du brevet: **13.03.1996**
(21) Numéro de dépôt: 93402696.4
(22) Date de dépôt: 03.11.1993
(51) Int. Cl.: B62D 57/032, B62D 57/02

(54) **Pied de robot marcheur**
Fuss eines Gehroboters
Foot of a walking robot

(30) Priorité: 05.11.1992 FR 9213326
(43) Date de publication de la demande: 11.05.1994
(73) Titulaire: COMMISSARIAT A L'ENERGIE ATOMIQUE, F-75015 Paris (FR)
(72) Inventeur: De Beaucourt, Philippe, F-75006 Paris (FR); Garrec, Philippe, F-75017 Paris (FR); Morganti, Philippe, F-91150 Etampes (FR); Sabourin, Didier, F-94140 Alfortville (FR)
(74) Mandataire: Ilgart, Jean-Christophe

(56) Documents cités:
- EP-A- 0 406 018
- EP-A- 0 433 091
- FR-A- 379 528
- FR-A- 2 653 516
- INTERN. JOURNAL OF ROBOTICS RESEARCH vol. 3, no. 2 , 1984 , CAMBRIDGE, MASSACHUSETTS, USA pages 113 - 133 SHIGEO HIROSE 'A STUDY OF DESIGN AND CONTROL OF A QUADRUPED WALKING VEHICLE'

## Description

L'invention a trait à un pied de robot marcheur.

Certains robots mobiles progressent sur le sol à la manière de nombreux êtres vivants, en s'appuyant sur des pattes qui effectuent des mouvements alternés en avant et en arrière pendant lesquels des pieds sont alternativement posés sur le sol et soulevés.

Un problème important de cette catégorie de robots est que la qualité de l'appui du pied au sol est souvent imprévisible, ce qui peut provoquer le déséquilibre et la chute du robot si par exemple le pied glisse sur une surface trop inclinée ou un objet mobile posé sur le sol, si le contact est produit sur une trop faible superficie qui s'effondre dès que le poids du robot est appliqué, ou si l'appui n'existe que sur une partie excentrée du pied, qui bascule ensuite.

Les capteurs traditionnels utilisés pour reconnaêtre l'environnement du robot par une vision artificielle ou un procédé du même genre ont du mal à distinguer certaines catégories d'obstacles ou d'embêches, notamment des dénivellations comme les marches d'escalier, certains petits objets posés sur le sol et les surfaces telles que les caillebotis. Ils sont de plus compliqués et coêteux à mettre en oeuvre, et ils peuvent être facilement altérés, par exemple en s'encrassant. Ils ne sont donc pas fiables dans de nombreuses circontances et notamment si le robot doit accomplir de longs trajets parmi les installations industrielles.

Le pied de robot marcheur conforme à l'invention comprend une armature munie d'une semelle plane d'appui sur le sol, un joint de cardan entre l'armature et une autre partie du robot et qui est conçue pour autoriser des orientations de la semelle dans toutes les directions, des capteurs d'inclinaison de la semelle, des capteurs de contact du sol situés à côté de la semelle et sensiblement dans le plan de la semelle, l'armature étant conçue en deux parties, caractérisé en ce que les deux parties sont reliées par un ressort d'absorption d'énergie de compression du pied produite par l'autre partie du robot, l'une des parties de l'armature portant le joint de cardan et l'autre des parties de l'armature portant la semelle et les capteurs de contact. Le pied de robot selon le préambule de la revendication 1 est connu de EP-A-0406018.

La combinaison de ces moyens permet en effet de remédier aux inconvénients mentionnés plus haut : la semelle se place d'elle-même à l'orientation locale du sol, mais les capteurs d'inclinaison peuvent refuser l'appui si l'inclinaison est trop forte pour exclure un glissement ; le capteur de contact permet de vérifier si l'appui est produit sur une surface suffisante et donc suffisamment ferme ; enfin, la division de l'armature en deux parties reliées par des ressorts permet de ne pas appliquer immédiatement l'intégralité de l'effort d'appui, ce qui laisse le temps nécessaire pour vérifier la qualité de l'appui et éventuellement relever le pied pour tenter de le poser ailleurs.

Les capteurs de contact sont avantageusement des coussinets rétractiles et reliés à l'armature par des ressorts. La détection de leur déplacement permet d'identifier sans ambiguïté le contact.

L'armature peut être complétée par une bordure latérale qui entoure la semelle et qui est mobile pour se déformer dès qu'elle touche un obstacle latéral, ce qui indique qu'il est préférable d'éloigner le pied.

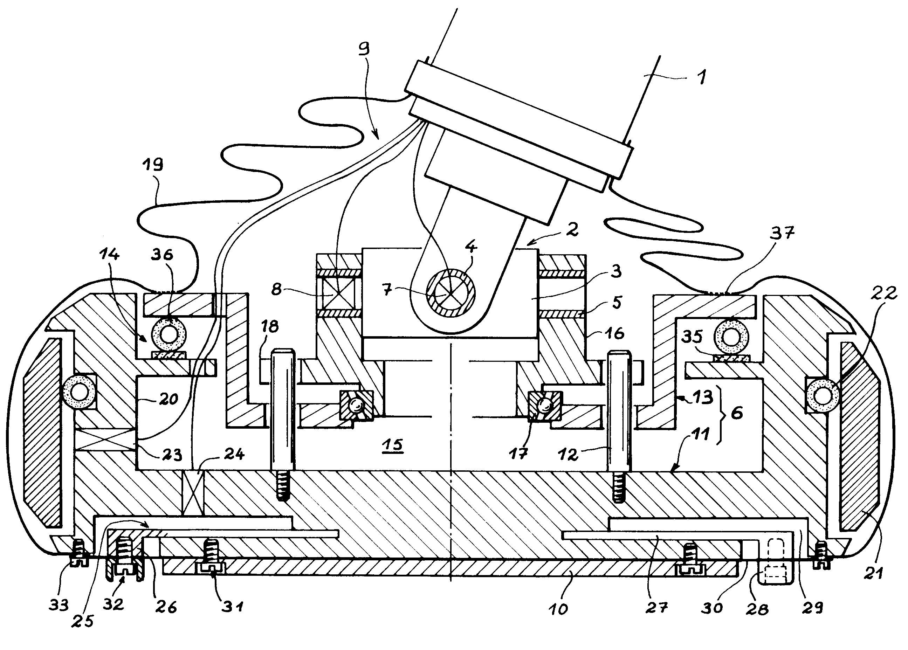

On va maintenant décrire plus en détail l'invention à l'aide de la figure unique qui illustre une vue en coupe longitudinale d'un pied conforme à l'invention.

Le pied est relié à l'extrémité inférieure d'une jambe 1 du robot, non représenté par ailleurs mais qui peut être semblable à celui du brevet français 2 653 516, par un joint de cardan 2, composé d'une cage 3 mobile dont sortent un axe transversal 4 fixé à la jambe 1 et un axe longitudinal 5 fixé au sommet d'une armature 6 du pied. Les arbres 4 et 5 sont creux et abritent chacun un capteur angulaire 7 ou 8 qui permet de mesurer leur rotation. Les capteurs 7 et 8 sont, comme les autres qui seront bientêt décrits, reliés au système de commande du robot par des fils 9 qui courent le long de la jambe 1. Si la jambe 1 est déplacée sans que son inclinaison varie jamais, on peut connaêtre immédiatement l'inclinaison du pied et surtout d'une semelle 10 plane et horizontale d'appui au sol, qui lui appartient et qui est fixée à la surface de dessous d'une partie inférieure 11 de l'armature 6. Sinon, l'inclinaison de la semelle 10 peut être calculée en connaissant l'inclinaison de la jambe 1.

Des colonnettes 12 verticales de guidage s'élèvent de la surface de dessus de cette partie inférieure 11 et passent à travers des perçages ménagés dans une partie supérieure 13 de l'armature 6, qui porte le joint de cardan 2, et permettent à la partie supérieure 13 de coulisser verticalement par rapport à l'autre. Un ressort 14 est logé dans une excavation 15 entre les parties 11 et 13 de l'armature 6 : quand la jambe 1 s'abaisse, il est comprimé dès que la semelle 10 touche le sol jusqu'à ce qu'il transmette toute la partie du poids du robot qui pèse sur le pied.

Le ressort 14 n'est pas un ressort métallique classique mais un système constitué d'une bande de caoutchouc 35 circulaire collée sur la partie inférieure 11, et d'un tuyau de silicone 36 recourbé en boucle et écrasé entre la bande de caoutchouc 35 et la partie supérieure 13, auxquelles il est collé : le tuyau de silicone 36 s'ovalise avec une raideur faible et uniforme quand il est comprimé, et jusqu'à ce qu'il soit totalement écrasé, après quoi le ressort 14 ne possède plus que l'élasticité de grande raideur de la bande de caoutchouc 35 ; le système est d'abord suffisamment souple pour permettre de poser le pied bien avant l'application totale de l'effort, afin de pouvoir anticiper les appuis incorrects ou hasardeux, puis suffisamment rigide pour ne plus produire de compression importante quand l'effort commence à être appliqué. Le tuyau de silicone 36 a de plus le grand avantage de se redresser sans produire de vibrations importantes quand il est relêché, c'est-à- dire qu'il a un fort amortissement. Enfin, les mouvements de translation horizontale, indésirables, des deux parties 11 et 13 de l'armature 6 sont à peu près interdits, car le ressort 14 est très rigide vis-à-vis de ces mouvements.

La partie supérieure 13 de l'armature 6 comporte une partie de pivot 16 porteuse du joint de cardan 2, reliée au reste par un roulement 17 rotatif autour d'un axe vertical et qui autorise ainsi la semelle 10 à tourner tout en restant dans un plan invariable que les mouvements du joint de cardan 2 ont déterminé. Il est alors utile de munir le pivot 16 de butées 18 qui viennent toucher certaines des colonnettes 12 pour limiter la rotation et ne pas arracher des fils de capteurs ni détériorer le manchon 19 avantageusement employé pour envelopper la plus grande partie du pied, à l'exception de sa surface inférieure. Le bord supérieur du manchon 19 est serti autour de la jambe 1 : il est en matériau élastique et se tord donc dès qu'un pivotement de la semelle 10 est produit, mais il ramène le pied dans une position privilégiée quand le pied est soulevé. Il est par ailleurs utile pour protéger les mécanismes du pied des chocs et des salissures. Pour soulager la partie inférieure du manchon 19, une sertissure supplémentaire est réalisée au sommet de l'armature 6, sur une portée circulaire 37.

La partie inférieure 11 de l'armature 6 comprend une bordure 20 autour de la partie supérieure 13 et qui porte un anneau 21, continu ou non qui l'entoure, ainsi que la semelle 10, et que le manchon 19 isole de l'extérieur. L'anneau 21 est monté sur la bordure 20 par l'intermédiaire d'un ressort 22 qui peut être ici encore un tuyau souple enroulé autour de la bordure 20. L'anneau 21 est par ailleurs librement mobile autour de la bordure 20 : il est préférable que ses frottements sur le ressort 22 soient réduits, ce qui est le cas s'il est en aluminium et que le ressort 22 est en vinyle. Des capteurs 23 de déplacement sont disposés en couronne sur la bordure 20 et mesurent les déplacements de l'anneau 21 qui se produisent dès qu'il touche des obstacles latéraux, qui sont ainsi signalés au système de commande du robot.

D'autres capteurs de déplacement 24 sont insérés dans la partie inférieure 11, devant des capteurs de contact 25 constitués essentiellement d'un coussinet 26 monté sur une lame élastique 27 dont l'extrémité opposée est encastrée dans la partie inférieure 11. Les coussinets 26 sont terminés par un patin 28 qui s'étend un peu au-dessous de la semelle 10 et doit généralement toucher le sol quand celle-ci est posée sur lui. Le patin 28 et le coussinet 26 sont alors repoussés, et la lame 27 est fléchie. Ces déplacements sont repérés par les capteurs de déplacement 24 et rapportés au système de commande du robot. Les coussinets 26 sont disposés à cêté de la semelle 10, c'est-à-dire autour d'elle ou éventuellement dans des lacunes de celle-ci. L'appui du pied au sol est interrompu par le système de commande et le pied est déplacé si trop peu de ces capteurs sont déplacés, car cela signifie généralement que la semelle 10 ne touche le sol que sur une trop petite superficie, voire un objet posé sur le sol.

Les coussinets 26 et les lames 27 sont logés dans des alvéoles 29 de la partie inférieure 11, qui sont avantageusement recouverts par une feuille souple 30 de protection assurant notamment l'étanchéité, éventuellement commune à tous les alvéoles 29 et s'étendant donc sur presque toute la surface inférieure de l'armature 6. Elle comporte alors une portion recouverte par la semelle 10, qui la serre contre la partie inférieure 11 par des vis de fixation 31. De façon analogue, des portions de la feuille souple 30 sont serrées entre les coussinets 26 et les patins 28 par des vis de fixation 32 des patins 28 qui permettent de remplacer à volonté les patins 28 quand ils sont usés.

Des vis 33, des rivets ou n'importe quel autre moyen peuvent être utilisés pour fixer la feuille souple 30 et le manchon 19 à l'armature.

Le pourtour des alvéoles 29 est avantageusement muni d'un rebord arrondi qui ne risque pas de couper la feuille souple 30 quand les coussinets 26 sont rétractés.

Le pied décrit ici offre donc toutes les garanties de sécurité, et il est utilisable pour à peu près tous les genres de sols.

Les capteurs 23 et 24 de déplacement peuvent être inductifs, optiques, magnétiques ou autres, ou encore constitués de potentiomètres ou de micro-rupteurs de précision, c'est-à-dire avec ou sans contact matériel.

## Revendications

1. Pied de robot marcheur comprenant une armature (6) munie d'une semelle plane (10) d'appui sur le sol, un joint de cardan (2) entre l'armature (6) et une autre partie (1) du robot et qui est conçu pour autoriser des orientations de la semelle (10) dans toutes les directions, des capteurs (7, 8) d'inclinaison de la semelle (10), des capteurs de contact (25) du sol situés à côté de la semelle (10) et sensiblement dans le plan de la semelle, l'armature étant conçue en deux parties (11, 13), caractérisé en ce que les deux parties sont reliées par un ressort (14) d'absorption d'énergie de compression du pied produite par l'autre partie du robot, l'une des parties (13) de l'armature portant le joint de cardan (2) et l'autre des parties (11) de l'armature portant la semelle (10) et les capteurs de contact (25).

2. Pied de robot marcheur suivant la revendication 1, caractérisé en ce que les deux parties de l'armature sont reliées par des colonnettes (12) de guidage coulissant.

3. Pied de robot marcheur suivant l'une quelconque des revendications 1 ou 2, caractérisé en ce que le ressort (14) a une rigidité d'ensemble croissant avec la compression du pied.

4. Pied de robot marcheur suivant l'une quelconque des revendications 1 à 3, caractérisé en ce que les capteurs de contact (25) sont des coussinets (26) rétractiles reliés à l'armature (6) par des ressorts (27).

5. Pied de robot marcheur suivant la revendication 4, caractérisé en ce que les coussinets (26) sont mobiles dans des alvéoles (29) de l'armature (6), les alvéoles (29) étant recouverts d'une feuille souple (30) de protection.

6. Pied de robot marcheur suivant la revendication 5, caractérisé en ce que la feuille souple (30) est commune à tous les alvéoles (29), la semelle (10) étant montée sur l'armature (6) en recouvrant une portion de la feuille souple (30).

7. Pied de robot marcheur suivant l'une quelconque des revendications 4 à 6, caractérisé en ce que les coussinets (26) sont munis de patins (28) remplaçables destinés à toucher le sol.

8. Pied de robot marcheur suivant l'une quelconque des revendications 1 à 7, caractérisé en ce que l'armature (6) comprend une bordure latérale mobile (21), entourant la semelle (10), de contact à des obstacles.

9. Pied de robot marcheur suivant l'une quelconque des revendications 1 à 8, caractérisé en ce que l'armature (6) comprend un pivot (17) autorisant des rotations de la semelle (10) dans le plan de la semelle, ainsi qu'un moyen (19) de rappel du pivot à un état privilégié.

10. Pied de robot marcheur suivant la revendication 9, caractérisé en ce que le moyen de rappel est un manchon qui enveloppe le pied, hormis la semelle et les capteurs de contact.

## Claims

1. Walking robot foot, comprising a fitting (6) provided with a planar base plate (19) for bearing on the ground, a swivel joint (2) between the fitting (6) and another part (1) of the robot and which is designed so as to authorize orientations of the base plate (10) in all directions, sensors (7,8) with respect to the inclination of the base plate (10), ground contact sensors (25) alongside the base plate (10) and substantially in the plane of the latter, the fitting being designed in two parts (11,13), characterized in that the two parts are connected by a spring (14) for absorbing the compression energy of the foot produced by the other part of the robot, one of the fitting parts (13) carrying the swivel joint (2) and the other of the fitting parts (11) carrying the base plate (10) and the contact sensors (25).

2. Walking robot foot according to claim 1, characterized in that the two fitting parts are connected by sliding guiding posts (12).

3. Walking robot foot according to either of the claims 1 and 2, characterized in that the spring (14) has an overall rigidity increasing with the compression of the foot.

4. Walking robot foot according to any one of the claims 1 to 3, characterized in that the contact sensors (25) are retractile bearings (26) connected to the fitting (6) by springs (27).

5. Walking robot foot according to claim 4, characterized in that the bearings (26) are mobile in cavities (29) of the fitting (6), the cavities (29) being covered by a flexible protective sheet (30).

6. Walking robot foot according to claim 5, characterized in that the flexible sheet (30) is common to all the cavities (29), the base plate (10) being mounted on the fitting (6) covering a portion of the flexible sheet (30).

7. Walking robot foot according to any one of the claims 4 to 6, characterized in that the bearings (26) are provided with replaceable base blocks (28) intended to touch the ground.

8. Walking robot foot according to any one of the claims 1 to 7, characterized in that the fitting (6) has a mobile lateral border (21) surrounding the base plate (19) and intended to come into contact with obstacles.

9. Walking robot foot according to any one of the claims 1 to 8, characterized in that the fitting (6) comprises a pivot (17) authorizing rotations of the base plate (10) in the plane of the latter, as well as a means (19) for returning the pivot to a privileged state.

10. Walking robot foot according to claim 9, characterized in that the return means is a sleeve which envelopes the foot, with the exception of the base plate and the contact sensors.

## Patentansprüche

1. Fuß eines Gehroboters, umfassend ein Stützwerk bzw. Gestell (6), versehen mit einer flachen Sohle (10) zum Abstützen auf dem Boden, ein kardanisches Gelenk (2) zwischen dem Gestell (6) und einem anderen Teil (1) des Roboters, vorgesehen um Schwenkungen der Sohle (10) in allen Richtungen zu ermöglichen, Neigungssensoren (7, 8) der Sohle (10), Bodenberührungssensoren (25), neben der Sohle (10) befindlich und im wesentlichen in der Ebene der Sohle, wobei das Gestell aus zwei Teilen (11, 13) konstruiert ist,
**dadurch gekennzeichnet**, daß die beiden Teile verbunden sind durch eine Feder (14) zur Absorption der Kompressionsenergie des Fußes, erzeugt durch den anderen Teil des Roboters, wobei einer der Teile (13) des Gestells das kardanische Gelenk (2) trägt und der andere Teil (11) des Gestells die Sohle (10) und die Berührungssensoren (25) trägt.

2. Fuß eines Gehroboters nach Anspruch 1, dadurch gekennzeichnet, daß die beiden Teile des Gestells verbunden sind durch Gleitführungssaulen (12).

3. Fuß eines Gehroboters nach einem der Ansprüche 1 oder 2, dadurch gekennzeichnet, daß die Feder (14) eine mit der Kompression des Fußes zunehmende Gesamtsteifigkeit aufweist.

4. Fuß eines Gehroboters nach einem der Ansprüche 1 bis 3, dadurch gekennzeichnet, daß die Beruhrungssonden (25) zurückdrückbare Lager (26) sind, mit dem Gestell (6) verbunden durch Federn (27).

5. Fuß eines Gehroboters nach Anspruch 4, dadurch gekennzeichnet, daß die Lager (26) beweglich sind in Hohlräumen (29) des Gestells (6), wobei die Hohlräume (29) durch eine elastische Schutzfolie bedeckt sind.

6. Fuß eines Gehroboters nach Anspruch 5, dadurch gekennzeichnet, daß die elastische Folie (30) allen Hohlräumen (29) gemeinsam ist, wobei die Sohle (10) an dem Gestell (6) befestigt ist, indem sie einen Teil der elastischen Folie (30) überdeckt.

7. Fuß eines Gehroboters nach einem der Ansprüche 4 bis 6, dadurch gekennzeichnet, daß die Lager (26) für die Bodenberührung mit auswechselbaren Kufen bzw. Schuhen (28) versehen sind.

8. Fuß eines Gehroboters nach einem der Ansprüche 1 bis 7, dadurch gekennzeichnet, daß das Gestell (6) für den Kontakt mit Hindernissen einen beweglichen seitlichen Rand (21) umfaßt, der die Sohle (10) umgibt.

9. Fuß eines Gehroboters nach einem der Ansprüche 1 bis 8, dadurch gekennzeichnet, daß das Gestell (6) ein Drehgelenk (17) umfaßt, das Drehungen der Sohle (10) in der Ebene der Sohle zuläßt, sowie eine Rückstelleinrichtung (19) des Drehgelenks in eine Vorzugsstellung.

10. Fuß eines Gehroboters nach Anspruch 9, dadurch gekennzeichnet, daß die Rückstelleinrichtung eine Muffe bzw. Manschette ist, die den Fuß umhüllt, ausgenommen die Sohle und die Berührungssensoren.
